# EUROPÄISCHE PATENTSCHRIFT

(11) **EP 2 946 968 B1**
(45) Veröffentlichungstag und Bekanntmachung des Hinweises auf die Patenterteilung: **23.11.2016**
(21) Anmeldenummer: 15166979.3
(22) Anmeldetag: 08.05.2015
(51) Int. Cl.: B60N 2/46

(54) **SITZ FÜR EINEN FAHRZEUGFÜHRER EINER BAUMASCHINE, SOWIE BAUMASCHINE**
SEAT FOR A DRIVER OF A CONSTRUCTION MACHINE AND CONSTRUCTION MACHINE
SIÈGE POUR CONDUCTEUR D'UN ENGIN ET ENGIN

(30) Priorität: 19.05.2014 DE 102014209462
(43) Veröffentlichungstag der Anmeldung: 25.11.2015
(73) Patentinhaber: Hamm AG, 95643 Tirschenreuth (DE)
(72) Erfinder: Mahler, Gerhard, 92670 Windischeschenbach (DE); Römer, Axel, 95643 Tirschenreuth (DE); Stöcklein, Dieter, 95701 Pechbrunn (DE)
(74) Vertreter: dompatent von Kreisler Selting Werner - Partnerschaft von Patent- und Rechtsanwälten mbB

(56) Entgegenhaltungen:
- WO-A1-2004/106108
- DE-A1-102008 018 458

## Beschreibung

Die Erfindung betrifft einen Sitz für einen Fahrzeugführer einer Baumaschine, insbesondere für eine Straßenwalze, nach dem Oberbegriff des Anspruchs 1, sowie eine Baumaschine mit einem derartigen Sitz nach Anspruch 14.

Aus der WO 2004/106108 ist eine verstellbare Armlehne für einen Fahrersitz mit einer Armlehnenhalterung bekannt, die eine Verstellung der Armlehne um mehrere Schwenkachsen ermöglicht.

Ferner ist aus der DE 10 2008 018 458 eine verstellbare Armlehne für eine fahrbare Arbeitsmaschine, insbesondere für ein Flurförderzeug bekannt. Die Armlehne weist dabei mindestens eine erste und eine zweite Verstelleinheit für eine Armlehnenhalterung auf.

Der Erfindung liegt die Aufgabe zugrunde, einen Sitz bzw. eine Baumaschine dahingehend zu verbessern, dass mit einer einfachen und stabilen Konstruktion die Armlehnenposition vielfältig verändert werden kann.

Zur Lösung dieser Aufgabe dienen die Merkmale des Anspruchs 1 bzw. 14.

Die Erfindung sieht bei einem Sitz für einen Fahrzeugführer einer Baumaschine, insbesondere für eine Straßenwalze, mit einer Sitzfläche, einer Sitzlehne, die eine vertikale Mittelebene in Längsrichtung aufweisen,und mit mindestens einer in einer verstellbaren Grundposition mit einer Armlehnenhalterung befestigten Armlehne, wobei sich die Armlehne von der Sitzlehne neben der Sitzfläche nach vorne erstreckt, in vorteilhafter Weise vor, dass eine Sitzkonsole zumindest die Sitzfläche und die Sitzlehne trägt, und dass die Armlehnenhalterung jeweils mindestens eine erste verstellbare Verbindungseinheit zu der Armlehne und eine zweite verstellbare Verbindungseinheit zu der Sitzkonsole aufweist.

Eine derartige Konstruktion mit einer verstellbaren Verbindungseinheit zu der Armlehne und einer weiteren verstellbaren Verbindungseinheit zu der Sitzkonsole ermöglicht eine einfache und stabile Konstruktion, mit der die Armlehnenposition vielfältig verändert werden kann.

Es ist vorgesehen, dass die Armlehne über die erste oder zweite Verbindungseinheit zur Einstellung einer Grundeinstellung hinsichtlich eines seitlichen Schwenkwinkels relativ zu einer Parallelen zu der vertikalen Mittelebene um eine einzige erste Achse vorzugsweise im Bereich des der Sitzlehne zugewandten Endes der Armlehne einstellbar an der Armlehnenhalterung befestigt ist.

Der Fahrzeugführer kann in vorteilhafter Weise die Grundeinstellung der Armlehne hinsichtlich eines seitlichen Schwenkwinkels einstellen und an seine Körperhaltung anpassen. Dabei kann die Einstellung über die der Armlehne bzw. der Sitzkonsole zugeordneten Verbindungseinheit erfolgen. Die Verschwenkung erfolgt um eine nahezu vertikale oder leicht, z.B. parallel zur Sitzlehne, geneigte Achse, wobei sich der seitliche Schwenkwinkel auf eine Parallele zu der sich in Längsrichtung erstreckenden vertikalen Mittelebene durch den Sitz bezieht.

Bei einem bevorzugten Ausführungsbeispiel ist vorgesehen, dass die Armlehne über die erste oder zweite Verbindungseinheit um die erste oder um eine zu der ersten Achse parallele Achse über die Grundposition hinaus seitlich nach außen gegen eine Rückstellkraft oder einrastbar verschwenkbar ist.

Die Armlehne kann über die Grundposition hinaus in vorteilhafter Weise nach außen zusätzlich reversibel oder einrastend verschwenkt werden, um dem Fahrzeugführer beispielsweise bei Bedarf seitlich eine bessere Sicht nach unten zu erlauben.

Bei einer bevorzugten Weiterbildung der Erfindung ist vorgesehen, dass die erste Verbindungseinheit zweiteilig ist und am oberen Ende der Armlehnenhalterung angeordnet ist, wobei ein oberer Teil drehfest mit der Armlehne verbunden ist und ein unterer Teil in einer einstellbaren seitlichen Grundeinstellung drehfest an der Armlehnenhalterung befestigt ist. Dabei kann der obere Teil mit der Armlehne relativ zu dem unteren Teil gegen eine Rückstellkraft oder einrastbar verschwenkt werden.

Eine derartige Konstruktion ermöglicht eine flexible Einstellung bei einem Höchstmaß an Stabilität.

Es ist vorgesehen, dass die Armlehne ausgehend von einer in einem ersten Bereich von 0° bis 15 °, vorzugsweise 0° bis 10°, fest einstellbaren Grundeinstellung zusätzlich um einem Betrag von bis zu 10°, vorzugsweise bis zu 8°, rückstellbar oder einrastbar verschwenkbar ist.

Bei einer bevorzugten Ausführungsform ist vorgesehen, dass die Armlehne gemeinsam mit der Armlehnenhalterung über die am unteren Ende der Armlehnenhalterung an der Sitzkonsole befindliche zweite Verbindungseinheit bis zu einer hochgeklappten Ruheposition um eine im wesentlichen zu der Mittelebene orthogonale zweite Achse verschwenkbar ist.

Der Sitz ermöglicht somit, die Armlehne gemeinsam mit der Armlehnenhalterung hochzuklappen, um die Zugänglichkeit des Sitzes auch von der Seite mit dieser Armlehne zu erleichtern.

Dabei ist vorzugsweise vorgesehen, dass die Armlehne gemeinsam mit der Armlehnenhalterung um bis zu 90°, vorzugsweise bis zu ca. 70°, in die hochgeklappte Ruheposition verschwenkbar ist.

Bei einem bevorzugten Ausführungsbeispiel ist vorgesehen, dass die Armlehne über die am unteren Ende der Armlehnenhalterung an der Sitzkonsole befindliche zweite Verbindungseinheit um die im wesentlichen zu der Mittelebene orthogonale zweite Achse in der Neigung einstellbar ist.

Die Konstruktion der Armlehnenhalterung ermöglicht es somit, zusätzlich auch den Neigungswinkel der Armlehne einzustellen, so dass die Armlehne von dem Fahrzeugführer in eine für ihn individuelle komfortable Position eingestellt werden kann, die ergonomisch ist und Körperverspannungen vermeidet.

Dabei ist vorzugsweise vorgesehen, dass die Armlehne bis zu 15°, vorzugsweise bis zu 10°, nach unten neigbar ist.

Die Armlehne kann an der Armlehnenhalterung vorzugsweise in Richtung der ersten Achse höhenverstellbar befestigt sein. Auf diese Weise ist zusätzlich eine Höhenverstellung realisiert, die besonders bevorzugt mit der Einstelleinrichtung für den seitlichen Schwenkwinkel kombiniert sein kann. Dabei ist die erste Verbindungseinheit in der Armlehnenhalterung um einen vorbestimmten Betrag von beispielsweise 10 cm in der Höhe verschiebbar und in einer gewünschten Position arretierbar.

Hierzu ist vorzugsweise vorgesehen, dass die erste oder zweite Verbindungseinheit eine Spannhülse aufweist, die ein zylindrisches Teil der Armlehnenhalterung umfasst und über eine Handhabungseinrichtung, vorzugsweise einen Drehknauf oder Hebel, lösbar bzw. feststellbar ist, um die Armlehne vorzugsweise in Richtung der ersten Achse in der Höhe zu verstellen.

Bei einem bevorzugten Ausführungsbeispiel ist vorgesehen, dass das zylindrische Teil der Armlehnenhalterung ein in Richtung der ersten Achse verlaufendes Langloch aufweist, wobei das Langloch einerseits die Höhenverstellung und andererseits die seitliche Verstellung der Armlehne um die erste Achse mit Hilfe eines in das Langloch eingreifenden Begrenzungselementes begrenzt.

Das zylindrische Teil kann zumindest teilweise aus einem Hohlzylinder gebildet sein.

Bevorzugt ist vorgesehen, dass in der oberen ersten Verbindungseinheit in Verbindung mit dem zylindrischen Teil der Armlehnenhalterung die Einrichtungen zum Einstellen des Schwenkwinkels in der Grundeinstellung, zur weitergehenden Verschwenkung der Armlehne über die Grundeinstellung hinaus und zur Höhenverstellung integriert sind.

Dies ermöglicht eine kompakte und steife Konstruktion der Armlehnenhalterung.

Hierzu kann zusätzlich vorgesehen sein, dass in der unteren zweiten Verbindungseinheit das Gelenk für die zweite Achse und die Neigungsverstelleinrichtung integriert sind.

In die Armlehne können Bedien- und Anzeigeeinrichtungen und/oder ein Zusatzdisplay integriert sein.

Die Sitzkonsole kann orthogonal zur Mittelebene über eine Plattform der Baumaschine verfahrbar sein.

Die Erfindung betrifft desweiteren eine Baumaschine, insbesondere eine Straßenwalze mit dem vorbeschriebenen Sitz.

Im Folgenden wird unter Bezugnahme auf die Zeichnungen ein Ausführungsbeispiel der Erfindung näher erläutert:

Es zeigen:
- Fig. 1: eine Draufsicht auf eine Straßenwalze mit integriertem Sitz,
- Fig. 2: eine perspektivische Ansicht des Sitzes,
- Fign. 3a bis 5a: Draufsichten auf den Sitz mit unterschiedlichen Armlehnenpositionen,
- Fign. 3b bis 5b: perspektivische Ansichten der Armlehnenhalterungen in Positionen, die den Fign. 3a bis 5a jeweils entsprechen,
- Fig. 6: einen Schnitt durch die Armlehnenhalterung in Seitenansicht,
- Fig. 7: einen Schnitt durch die Armlehnenhalterung in Draufsicht,
- Fig. 8: die Neigungsverstelleinrichtung, und
- Fig. 9: die Klappfunktion der Armlehne.

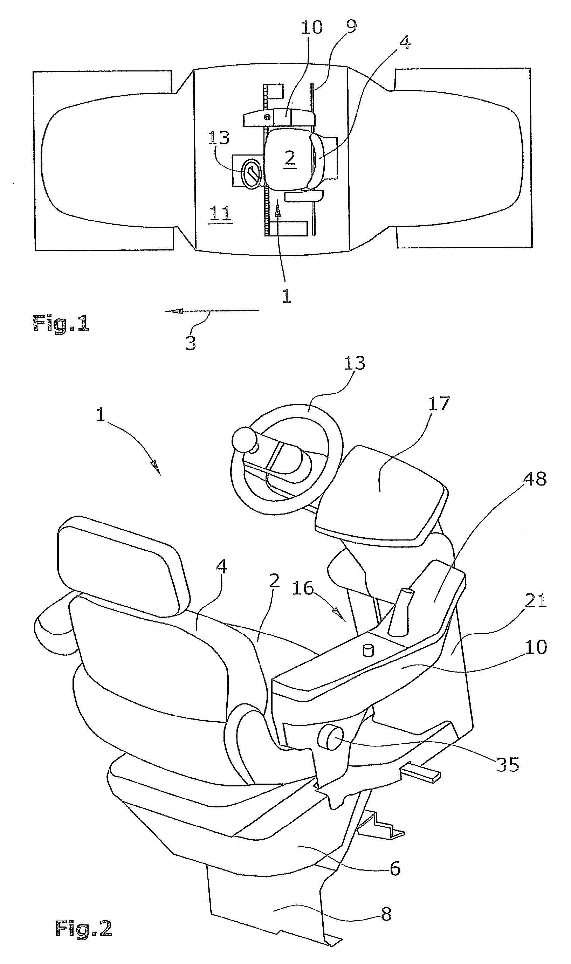

Fig. 1 zeigt eine schematische Draufsicht auf eine Straßenwalze mit einem zumindest quer zur Fahrtrichtung auf einer Plattform 11 eines Fahrstandes verschiebbaren Sitz 1. Der Sitz 1 weist eine in Fahrtrichtung 3 weisende Sitzfläche 2 auf, die nach hinten von einer Sitzlehne 4 begrenzt ist. Die Sitzfläche 2 ist auf einer Sitzkonsole 6 montiert, die auf einen verfahrbaren Sitzwagen befestigt ist, der entlang mindestens einer Führungseinrichtung 9 quer zur Fahrtrichtung 3 mit Hilfe eines elektrischen Antriebs und einer Steuereinrichtung 16 verfahrbar ist. Die Sitzfläche 2 und die Sitzlehne 4 haben eine vertikale Mittelebene 26, die parallel zur Fahrtrichtung 3 verläuft.

An dem Sitz 1 ist, wie aus Fig. 2 ersichtlich ist, eine gemeinsam mit dem Sitz 1 verfahrbare Lenksäule 21 mit Lenkeinrichtung 13, sowie ein Armaturenbrett 17 befestigt.

Vorzugsweise auf der rechten Seite des Sitzes 1 ist eine mit einer Armlehnenhalterung 8 an der Sitzkonsole 6 befestigte Armlehne 10 vorgesehen, die Bedien- und Anzeigeelemente 48 aufweist und beispielsweise auch eine Steuerungseinrichtung 16 für die Sitzverstellung und/oder ein Zusatzdisplay aufnehmen kann.

Die Bedienelemente können beispielsweise aus einem Mini-Joystick bestehen, mit dem eine elektrische Sitzdrehung manuell gesteuert werden kann.

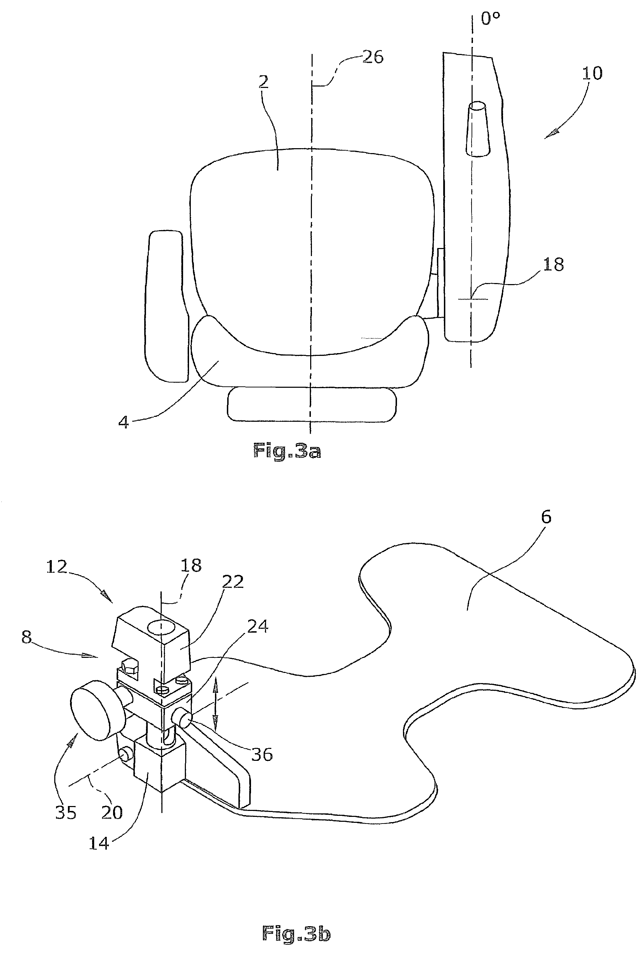

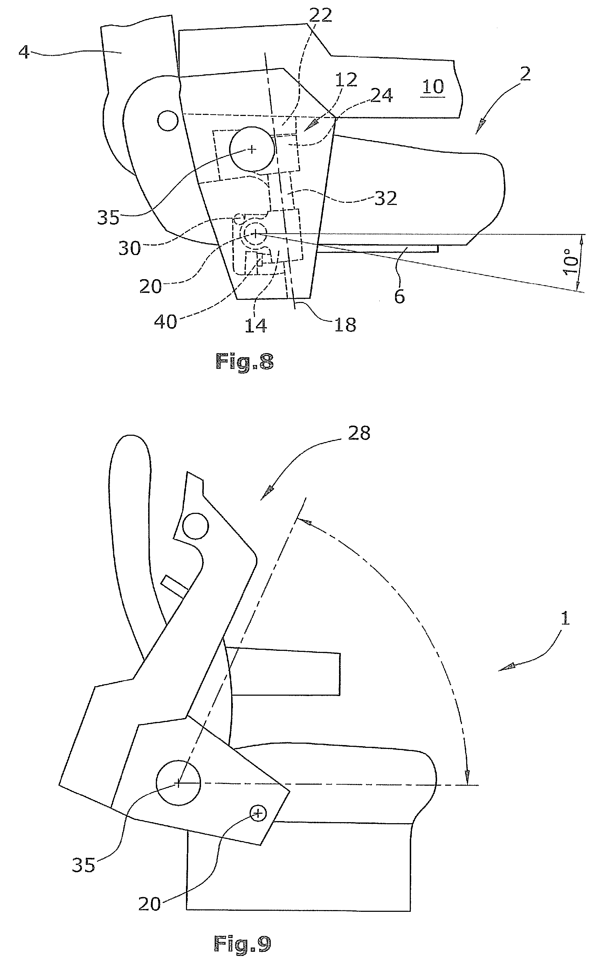

Die Fign. 3a, 4a und 5a zeigen die Armlehne 10 in unterschiedlichen Winkelstellungen in Draufsicht. Dabei beziehen sich die Winkelangaben des seitlichen Schwenkwinkels (bzw. seine Projektion auf eine horizontale Ebene) auf eine Parallele zur vertikalen Mittelebene 26, die mittig zu der Sitzfläche 2 und der Sitzlehne 4 verläuft. Die Armlehne 10 kann um eine erste Achse 18 verschwenkt werden, die sich leicht geneigt nahezu parallel zu der Sitzlehne 4 erstrecken kann und, wie aus Fig. 8 ersichtlich, in ihrer Neigung eingestellt werden kann.

Fig. 3a zeigt die Armlehne 10 in einer Grundeinstellung von 0°, bei der die Armlehne 10 im wesentlichen parallel zur vertikalen Mittelebene 26 verläuft.

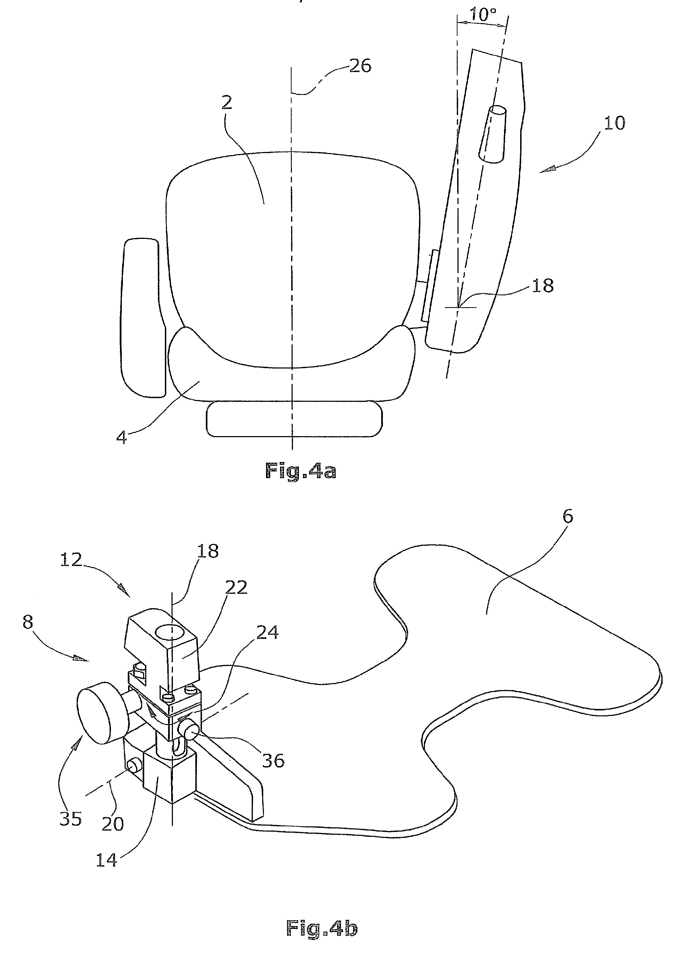

Fig. 4a zeigt die Armlehne 10 in einer 10° Winkeleinstellung, die als Grundeinstellung ebenfalls einstellbar ist. Die Grundeinstellung für den Schwenkwinkel der Armlehne lässt sich bevorzugt stufenlos in den Bereich zwischen 0° und 15°, vorzugsweise zwischen 0° und 10° einstellen.

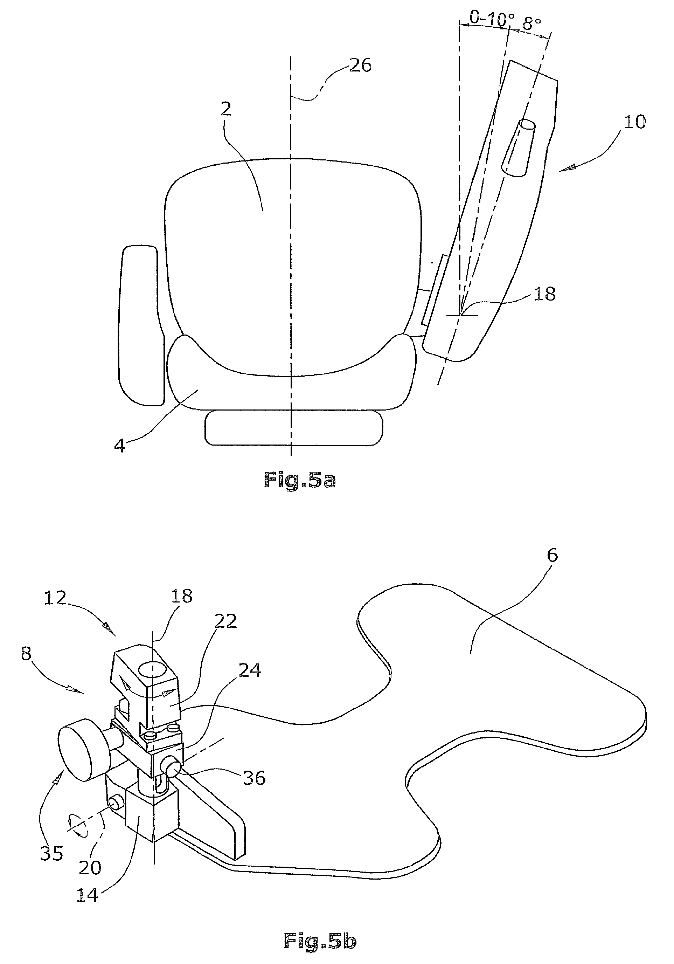

Fig. 5a zeigt eine Verschwenkmöglichkeit der Armlehne 10 über den maximalen Winkel der Grundeinstellung hinaus. Dies bedeutet, dass die Armlehne 10 aus ihrer Grundeinstellung, beispielsweise unter einem Schwenkwinkel zwischen 0° und 10° hinaus bis zu beispielsweise 8° zusätzlich verschwenkt werden kann. Das ermöglicht es dem Fahrzeugführer, die Armlehne kurzfristig weiter zu verschwenken, um an der Seite der Armlehne 10, z.B. an der vertikalen Außenkante der Baumaschine oder Straßenwalze, herabzuschauen.

Es versteht sich, dass die Armlehne 10 insbesondere für Länder mit Linksverkehr auch auf der linken Seite des Sitzes montiert sein kann.

Die Fign. 3b bis 5b zeigen die Armlehnenhalterung mit einer ersten verstellbaren Verbindungseinheit 12, die mit der Armlehne 10 verbunden ist und einer zweiten verstellbaren Verbindungseinheit 14, die mit der Sitzkonsole 6 verbunden ist, wobei die Sitzkonsole 6 nur schematisch dargestellt ist.

Die Fign. 3b, 4b und 5b zeigen die Armlehnenhalterung 8 jeweils in den den Fign. 3a, 4a und 5a entsprechenden Schwenkwinkeleinstellungen der Armlehne 10.

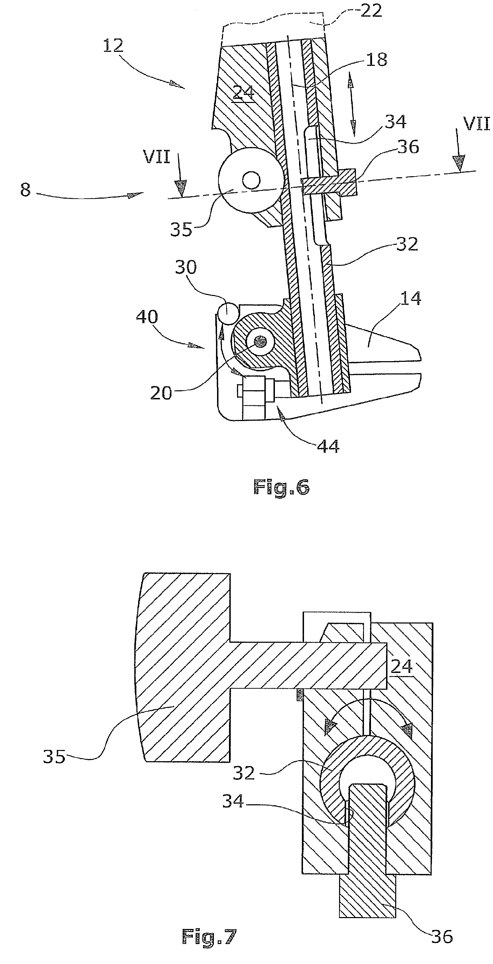

Die Armlehnenhalterung 8 ist im vertikalen Längsschnitt und im horizontalen Querschnitt in den Fign. 6 und 7 gezeigt.

An der Verbindungseinheit 14 ist drehfest ein zylindrisches Teil 32, vorzugsweise ein Hohlzylinder, wie aus Fig. 6 ersichtlich, befestigt, an dessen oberen Ende sich die erste Verbindungseinheit 12 befindet.

Die erste Verbindungseinheit 12 ermöglicht in Verbindung mit dem zylindrischen Teil 32 die Grundeinstellung des Schwenkwinkels für die Armlehne 10, die weitergehende Verschwenkung der Armlehne, wie in den Fign. 5a und 5b gezeigt, und die Höhenverstellung der Armlehne 10.

Die weitergehende Verschwenkung der Armlehne 10, wie in den Fign. 5a und 5b gezeigt, wird durch einen relativ zu einem unteren Teil 24 der Verbindungseinheit 12 um die Achse 18 oder eine hierzu im wesentlichen parallele Achse verschwenkbares oberes Teil 22, das mit der Armlehne 10 fest verbunden ist, realisiert. Dabei kann das obere Teil 22 um einen Winkel von vorzugsweise bis zu 8° relativ zu dem unteren Teil verschwenkt werden, und zwar entweder gegen eine Federkraft, so dass die Armlehne 10 selbsttätig wieder in die Grundeinstellung zurückschwenkt, oder mit Hilfe eines Rastelementes, bei der die Armlehne 10 aus der Grundstellung heraus in dem erweiterten Schwenkwinkel reversibel einrasten kann.

Der untere Teil 24 der Verbindungseinheit 12 umschließt das zylindrische Teil 32, der vorzugsweise als Hohlzylinder drehbeweglich gestaltet ist und kann in unterschiedlichen Drehpositionen relativ zu dem zylindrischen Teil 32 mit Hilfe einer Handhabungseinrichtung, z.B. einem Drehknopf 35, in einer gewünschten Drehposition arretiert werden.

Dabei wird die Drehposition durch ein in ein Langloch 34 des zylindrischen Teils 32 eingreifendes Begrenzungselementes 36 beispielsweise auf maximal 10° Schwenkwinkel begrenzt, der dem Schwenkwinkel der Armlehne 10 in ihrer Grundstellung entspricht. Dabei wird der einstellbare Winkel durch die Breite des Langlochs 34 in dem zylindrischen Teil 32 und dem Durchmesser des Begrenzungselementes 36 z.B. in Form eines Stiftes bestimmt.

Wird die von dem unteren Teil 24 gebildete Spannhülse mit Hilfe des Drehknopfes 35 gelöst, kann die Verbindungseinheit 12 nicht nur mit dem unteren Teil 24 hinsichtlich des Schwenkwinkels, sondern auch hinsichtlich der Höheneinstellung längs des Langloches 34 verstellt werden. Dies bedeutet, dass mit dem Einstellknopf 35 die Grundeinstellung für die Höhe und für den Schwenkwinkel der Armlehne 10 zugleich ausgewählt und arretiert werden können. Der Umfang der Höhenverstellung ist von der Länge des Langlochs 34 abhängig und kann beispielsweise 10 cm betragen.

Die mit der Sitzkonsole 6 verbundene verstellbare Verbindungseinheit 14 ist relativ zur Sitzkonsole 6 um eine horizontale Achse 20, die vorzugsweise orthogonal zur Mittelebene 26 verläuft, schwenkbar in dem Gelenk 40 befestigt, wobei das Verschwenken der Armlehnenhalterung 8 um die Achse 20 ein Hochklappen der Armlehne 10, wie aus Fig. 9 ersichtlich, erlaubt. Ein Bolzen 30 dient als Anschlag für die Verschwenkung der Armlehne 10 nach hinten.

Außerdem kann an dem Gelenk 40 mit Hilfe einer Neigungsverstelleinrichtung 44 der Neigungswinkel der ersten Achse 18 und damit der Armlehne 10 ermöglicht werden. Die Neigungsverstelleinrichtung 44 bildet einen verstellbaren Anschlag für die Verbindungseinheit 14.

## Patentansprüche

1. Sitz (1) für einen Fahrzeugführer einer Baumaschine, insbesondere für eine Straßenwalze, mit einer Sitzfläche (2), einer Sitzlehne (4), die eine vertikale Mittelebene (26) in Längsrichtung aufweisen, und mit mindestens einer in einer verstellbaren Grundposition mit einer Armlehnenhalterung (8) befestigten Armlehne (10), wobei die Armlehne (10) sich von der Sitzlehne (4) neben der Sitzfläche (2) nach vorne erstreckt,
wobei eine Sitzkonsole (6) zumindest die Sitzfläche (2) und die Sitzlehne (4) trägt, und
wobei die Armlehnenhalterung (8) jeweils mindestens eine erste verstellbare Verbindungseinheit (12) zu der Armlehne (10) und eine zweite verstellbare Verbindungseinheit (14) zu der Sitzkonsole (6) aufweist,
**dadurch gekennzeichnet,**
**dass** die Armlehne (10) über die erste oder zweite Verbindungseinheit (12,14) zur Einstellung einer Grundeinstellung hinsichtlich eines seitlichen Schwenkwinkels relativ zu einer Parallelen zu der vertikalen Mittelebene (26) um eine einzige erste Achse (18) vorzugsweise im Bereich des der Sitzlehne (4) zugewandten Endes der Armlehne (10) einstellbar an der Armlehnenhalterung (8) befestigt ist.

2. Sitz (1) nach Anspruch 1, **dadurch gekennzeichnet, dass** die Armlehne (10) über die erste oder zweite Verbindungseinheit (12,14) um die oder eine zu der ersten Achse (18) parallele Achse über die Grundposition hinaus seitlich nach außen gegen eine Rückstellkraft oder einrastbar verschwenkbar ist.

3. Sitz (1) nach einem der Ansprüche 1 bis 2, **dadurch gekennzeichnet, dass** die erste Verbindungseinheit (12) zweiteilig ist und am oberen Ende der Armlehnenhalterung (8) angeordnet ist, wobei ein oberer Teil (22) drehfest mit der Armlehne (10) verbunden ist und ein unterer Teil (24) in einer einstellbaren seitlichen Grundeinstellung drehfest an der Armlehnenhalterung (8) befestigt ist, und wobei der obere Teil (22) mit der Armlehne (10) relativ zu dem unteren Teil (24) gegen eine Rückstellkraft oder einrastbar verschwenkbar ist.

4. Sitz (1) nach Anspruch 3, **dadurch gekennzeichnet, dass** ausgehend von einer in einem ersten Bereich von 0° bis 15°, vorzugsweise 0° bis 10°, fest einstellbaren Grundeinstellung die Armlehne (10) zusätzlich um einem Betrag von bis zu 10°, vorzugsweise bis zu 8°, rückstellbar oder einrastbar verschwenkbar ist.

5. Sitz (1) nach einem der Ansprüche 1 bis 4, **dadurch gekennzeichnet, dass** die Armlehne (10) gemeinsam mit der Armlehnenhalterung (8) über die am unteren Ende der Armlehnenhalterung (8) an der Sitzkonsole (6) befindliche zweite Verbindungseinheit (14) bis zu einer hochgeklappten Ruheposition (28) um eine im wesentlichen zu der Mittelebene (26) orthogonale zweite Achse (20) verschwenkbar ist.

6. Sitz (1) nach Anspruch 5, **dadurch gekennzeichnet, dass** die Armlehne (10) gemeinsam mit der Armlehnenhalterung (8) um bis zu 90°, vorzugsweise bis zu ca. 70°, in die hochgeklappte Ruheposition verschwenkbar ist.

7. Sitz (1) nach einem der Ansprüche 1 bis 6, **dadurch gekennzeichnet, dass** die Armlehne (10) über die am unteren Ende der Armlehnenhalterung (8) an der Sitzkonsole (6) befindliche zweite Verbindungseinheit (14) um eine im wesentlichen zu der Mittelebene orthogonale zweite Achse (20) in der Neigung einstellbar ist.

8. Sitz (1) nach Anspruch 7, **dadurch gekennzeichnet, dass** die Armlehne (10) bis zu 15°, vorzugsweise bis zu 10°, nach unten neigbar ist.

9. Sitz (1) nach einem der Ansprüche 1 bis 8, **dadurch gekennzeichnet, dass** die Armlehne (10) an der Armlehnenhalterung (8) vorzugsweise in Richtung der ersten Achse (18) höhenverstellbar befestigt ist.

10. Sitz (1) nach einem der Ansprüche 1 bis 9, **dadurch gekennzeichnet, dass** die erste oder zweite Verbindungseinheit (12,14) eine Spannhülse (24) aufweist, die ein zylindrisches Teil (32) der Armlehnenhalterung (8) umfasst und über eine Handhabungseinrichtung (35), vorzugsweise einen Drehknauf oder Hebel, lösbar bzw. feststellbar ist, um die Armlehne (10) vorzugsweise in Richtung der ersten Achse (18) in der Höhe zu verstellen.

11. Sitz (1) nach Anspruch 10, **dadurch gekennzeichnet, dass** das zylindrische Teil (32) der Armlehnenhalterung (8) ein in Richtung der ersten Achse (18) verlaufendes Langloch (34) aufweist, wobei das Langloch (34) einerseits die Höhenverstellung und andererseits die seitliche Verstellung der Armlehne (10) um die erste Achse (18) mit Hilfe eines in das Langloch (34) eingreifenden Begrenzungselementes (36) begrenzt.

12. Sitz (1) nach einem der Ansprüche 10 oder 11, **dadurch gekennzeichnet, dass** in der oberen ersten Verbindungseinheit (12) in Verbindung mit dem zylindrischen Teil (32) der Armlehnenhalterung (8) die Einrichtungen zur Einstellung des Schwenkwinkels in der Grundeinstellung, zur weitergehenden Verschwenkung der Armlehne (10) und zur Höhenverstellung der Armlehne (10) in der Grundeinstellung integriert sind.

13. Sitz (1) nach einem der Ansprüche 5 bis 12, **dadurch gekennzeichnet, dass** in der unteren zweiten Verbindungseinheit (14) das Gelenk (40) für die zweite Achse (20) und die Neigungsverstelleinrichtung (44) integriert sind.

14. Baumaschine, insbesondere Straßenwalze, mit einem Sitz (1) für einen Fahrzeugführer nach einem der Ansprüche 1 bis 13.

## Claims

1. A seat (1) for a driver of a construction machine, in particular for a road roller, comprising a seat surface (2) and a seat backrest (4) which comprise a vertical central plane (26) in longitudinal direction, and comprising at least one armrest (10) attached in an adjustable basic position by means of an armrest support (8), wherein
the armrest (10) extends from the seat backrest (4) next to the seat surface (2) towards the front,
wherein a seat console (6) carries at least the seat surface (2) and the seat backrest (4), and
wherein the armrest support (8) respectively comprises at least one first adjustable connection unit (12) to the armrest (10) and one second adjustable connection unit (14) to the seat console (6).
**characterized in**
**that** the armrest (10) is attached, in an adjustable fashion, to the armrest support (8) via the first or second connection unit (12,14) for adjusting a basic setting with regard to a lateral pivoting angle relative to a parallel to the vertical central plane (26) about a single first axis (18), preferably in the area of the end of the armrest (10) facing the seat backrest (4).

2. The seat (1) in accordance with claim 1, **characterized in that** the armrest (10) is pivotable, via the first or second connection unit (12,14), about the first axis (18) or about an axis extending parallel to the first axis (18), beyond the basic position laterally outwards against a resetting force or in a snap-in fashion.

3. The seat (1) in accordance with any one of the claims 1 to 2, **characterized in that** the first connection unit (12) is of two-part design and is arranged at the upper end of the armrest support (8), wherein an upper part (22) is connected to the armrest (10) in a non-rotatable fashion and a lower part (24) is attached, in an adjustable lateral basic setting, to the armrest support (8) in a non-rotatable fashion, and wherein the upper part (22) can be pivoted, with the armrest (10), relative to the lower part (24) against a resetting force or in a snap-in fashion.

4. The seat (1) in accordance with claim 3, **characterized in that** the armrest (10), starting from a basic setting permanently adjustable in a first range of 0° to 15°, preferably 0° to 10°, is additionally pivotable about an amount of up to 10°, preferably up to 8°, in a resettable or snap-in fashion.

5. The seat (1) in accordance with any one of the claims 1 to 4, **characterized in that** the armrest (10), together with the armrest support (8), is pivotable, via the second connection unit (14) positioned at the lower end of the armrest support (8) at the seat console (6), about a second axis (20) extending substantially orthogonally to the central plane (26) until reaching a folded-up resting position (28).

6. The seat (1) in accordance with claim 5, **characterized in that** the armrest (10) is pivotable, together with the armrest support (8), about up to 90°, preferably up to approximately 70°, into the folded-up resting position.

7. The seat (1) in accordance with any one of the claims 1 to 6, **characterized in that** the armrest (10) is adjustable in inclination, via the second connection unit (14) positioned at the lower end of the armrest support (8) at the seat console (6), about a second axis (20) extending essentially orthogonally to the central plane (26).

8. The seat (1) in accordance with claim 7, **characterized in that** the armrest (10) is inclinable downwards by up to 15°, preferably up to 10°.

9. The seat (1) in accordance with any one of the claims 1 to 8, **characterized in that** the armrest (10) is attached at the armrest support (8), preferably in the direction of the first axis (18), in a height-adjustable fashion.

10. The seat (1) in accordance with any one of the claims 1 to 9, **characterized in that** the first or second connection unit (12,14) comprises a clamping sleeve (24) which encloses a cylindrical part (32) of the armrest support (8) and is unlockable or lockable, respectively, via a handling device (35), preferably a rotating knob or lever, in order to adjust the armrest (10) in height preferably in the direction of the first axis (18).

11. The seat (1) in accordance with claim 10, **characterized in that** the cylindrical part (32) of the armrest support (8) comprises an oblong hole (34) extending in the direction of the first axis (18), wherein the oblong hole (34) limits, on the one hand, the height adjustment and, on the other hand, the lateral adjustment of the armrest (10) about the first axis (18) by means of a limiting element (36) engaging into the oblong hole (34).

12. The seat (1) in accordance with any one of the claims 10 or 11, **characterized in that** the devices for adjustment of the pivoting angle in the basic setting are integrated in the upper first connection unit (12), in connection with the cylindrical part (32) of the armrest support (8), for further pivoting of the armrest (10) and for height adjustment of the armrest (10) in the basic setting.

13. The seat (1) in accordance with any one of the claims 5 to 12, **characterized in that** the joint (40) for the second axis (20) and the inclination adjustment device (44) are integrated in the lower second connection unit (14).

14. A construction machine, in particular road roller, comprising a seat (1) for a driver in accordance with any one of the claims 1 to 13.

## Revendications

1. Siège (1) destiné à un conducteur d'un engin de construction, en particulier d'un rouleau compresseur, comprenant une assise (2), un dossier (4), lesquels comportent un plan médian vertical (26) dans la direction longitudinale, et au moins un accoudoir (10) fixé sur un support (8) dans une position de base réglable,
l'accoudoir (10) s'étendant vers l'avant depuis le dossier (4) à côté de l'assise (2),
une console (6) supportant au moins l'assise (2) et le dossier (4), et
le support (8) comportant au moins une première unité de raccordement réglable (12) associée à l'accoudoir (10) et une seconde unité de raccordement réglable (14) associée au support de siège (6),
**caractérisé en ce que**
l'accoudoir (10) est fixé de manière réglable au support (8) par l'intermédiaire de la première ou de la seconde unité de raccordement (12, 14) pour effectuer un réglage de base selon à un angle de pivotement latéral par rapport à une parallèle au plan médian vertical (26) autour d'un premier axe unique (18), de préférence dans la région l'extrémité de l'accoudoir (10) dirigée vers le dossier (4).

2. Siège (1) selon la revendication 1, **caractérisé en ce que** l'accoudoir (10) peut être pivoté de façon encliquetable, ou en s'opposant à une force de rappel, latéralement vers l'extérieur au-delà de la position de base autour de l'axe (18) ou d'un axe parallèle au premier axe (18) par l'intermédiaire de la première ou de la seconde unité de raccordement (12, 14).

3. Siège (1) selon l'une des revendications 1 à 2, **caractérisé en ce que** la première unité de raccordement (12) est constituée de deux parties et est disposée à l'extrémité supérieure du support d'accoudoir (8), une partie supérieure (22) étant reliée solidairement en rotation à l'accoudoir (10) et une partie inférieure (24) étant fixée solidairement en rotation au support (8) dans une position latérale réglable, et la partie supérieure (22) peut être pivotée de façon encliquetable ou en s'opposant une force de rappel conjointement l'accoudoir (10) par rapport à la partie inférieure (24).

4. Siège (1) selon la revendication 3, **caractérisé en ce qu'**à partir d'une position de base réglable de façon fixe dans une première gamme de 0° à 15°, de préférence de 0° à 10°, l'accoudoir (10) peut être pivoté par encliquetage ou par une force de rappel en plus d'un angle pouvant atteindre 10°, de préférence 8°.

5. Siège (1) selon l'une des revendications 1 à 4, **caractérisé en ce que** l'accoudoir (10) peut pivoter autour d'un second axe (20) sensiblement orthogonal au plan médian (26), conjointement avec le support (8), jusqu'à une position de repos relevée (28) par l'intermédiaire de la seconde unité de raccordement (14) se trouvant à l'extrémité inférieure du support (8) au niveau de la console (6).

6. Siège (1) selon la revendication 5, **caractérisé en ce que** l'accoudoir (10) peut pivoter conjointement avec le support (8) d'un angle pouvant atteindre 90°, de préférence environ 70°, jusque dans la position de repos relevée.

7. Siège (1) selon l'une des revendications 1 à 6, **caractérisé en ce que** l'accoudoir (10) est réglable en inclinaison autour d'un second axe (20) sensiblement orthogonal.au plan médian par l'intermédiaire de la seconde unité de raccordement (14) se trouvant à l'extrémité inférieure du support (8) au niveau de la console (6).

8. Siège (1) selon la revendication 7, **caractérisé en ce que** l'accoudoir (10) est incliné vers le bas d'un angle pouvant atteindre 15°, de préférence 10°.

9. Siège (1) selon l'une des revendications 1 à 8, **caractérisé en ce que** l'accoudoir (10) est fixé au support (8) de façon de préférence réglable en hauteur et de préférence en direction du premier axe (18).

10. Siège (1) selon l'une des revendications 1 à 9, **caractérisé en ce que** la première ou la seconde unité de raccordement (12, 14) comprend un manchon de serrage (24) qui comporte une partie cylindrique (32) du support (8) et qui peut être immobilisé ou libéré par un dispositif de manipulation (35), de préférence un bouton rotatif ou un levier pour déplacer en hauteur l'accoudoir (10), de préférence en direction du premier axe (18).

11. Siège (1) selon la revendication 10, **caractérisé en ce que** la partie cylindrique (32) du support (8) comporte un trou oblong (34) s'étendant en direction du premier axe (18), le trou oblong (34) limitant d'une part le réglage en hauteur et d'autre part le réglage latéral de l'accoudoir (10) autour du premier axe (18) au moyen d'un élément de limitation (36) s'engageant dans le trou oblong (34).

12. Siège (1) selon l'une des revendications 10 ou 11, **caractérisé en ce que** les moyens de réglage de l'angle de pivotement dans le réglage de base sont intégrés dans la première unité de raccordement supérieure (12) en liaison avec la partie cylindrique (32) du support (8), pour poursuivre le pivotement de l'accoudoir (10) et pour régler en hauteur l'accoudoir (10) dans le réglage de base.

13. Siège (1) selon l'une des revendications 5 à 12, **caractérisé en ce que** l'articulation (40) destinée au second axe (20) et le dispositif de réglage d'inclinaison (44) sont intégrés dans la seconde unité de raccordement inférieure (14).

14. Engin de construction, en particulier rouleau compresseur, équipé d'un siège (1) destiné à un conducteur d'engin selon l'une des revendications 1 à 13.
